# EUROPÄISCHE PATENTSCHRIFT

(11) **EP 3 523 146 B1**
(45) Veröffentlichungstag und Bekanntmachung des Hinweises auf die Patenterteilung: **18.11.2020**
(21) Anmeldenummer: 17758818.3
(22) Anmeldetag: 10.08.2017
(51) Int. Cl.: B60C 25/05, B60C 25/02

(54) **REIFENMONTAGEWERKZEUG**
TIRE MOUNTING TOOL
OUTIL POUR MONTER DE PNEUS

(30) Priorität: 12.09.2016 DE 102016217283
(43) Veröffentlichungstag der Anmeldung: 14.08.2019
(73) Patentinhaber: Beissbarth GmbH, 80993 München (DE)
(72) Erfinder: MACCHIA, Adriano, 42015 Correggio (IT)
(74) Vertreter: Schmitt-Nilson Schraud Waibel Wohlfrom Patentanwälte Partnerschaft mbB
(86) Internationale Anmeldenummer: PCT/EP2017/070290
(87) Internationale Veröffentlichungsnummer: WO 2018/046220

(56) Entgegenhaltungen:
- US-A- 3 332 467
- US-A1- 2014 359 949
- US-A1- 2015 273 959

## Beschreibung

### Stand der Technik

US 2014/359949 A1 offenbart einen Reifen-Kundendiensthammer, umfassend: einen Griffabschnitt; und einen Kopfabschnitt, wobei der Kopfabschnitt Folgendes umfasst: einen Schlagabschnitt; einen Vertiefungsabschnitt, der in einem Umfangsabschnitt des Schlagabschnitts gebildet ist; einen Keilabschnitt; und einen Körperabschnitt, der den Schlagabschnitt und den Keilabschnitt verbindet. Der Keilabschnitt weist einen wulstbrechenden Keil mit einer glatten oder abgeschrägten wulstbrechenden Kante und einem Hakenfortsatz mit einer glatten oder abgeschrägten wulstbrechenden Kante auf. Der wulstbrechende Keil weist ferner Vertiefungen auf, die dazu genutzt werden Schmiermittel zum Wulstbereich zu fördern, wenn der Hammer im Einsatz ist.

US 2015/273959 A1 beschreibt einen Reifenlöffel zum Montieren oder Entfernen eines Reifens von einer Radfelge. Der Reifenlöffel umfasst einen Löffel und eine längliche Welle. Der Löffel kann zwischen einer Radfelge und einem darauf angeordneten Reifen eingesetzt werden. Die längliche Welle definiert einen Hebelarm, der vom Löffel entfernt ist und der konfiguriert ist, um eine Hebelkraft aufzunehmen und auf den Löffel zu übertragen, um einen Teil des Reifens um die Radfelge zu biegen. Ein Kraftelement erstreckt sich quer von der Welle in der Nähe des Löffels und zwischen dem Löffel und dem Hebelarm und ist konfiguriert, um eine Druckkraft aufzunehmen und auf den Löffel zu übertragen, um den Löffel zwischen dem Reifen und der Radfelge anzutreiben. Ein Griffteil des Löffels weist mindestens eine Nut auf, die konfiguriert ist, um eine Oberfläche des Reifens und / oder der Radfelge zu greifen.

US 3 332 467 A beschreibt ein Abdrückwerkzeug zum Lösen eines Reifens von einer Felge.

Aus der WO 2015/044920 A und dem Dokument EP0767098 ist eine Reifenmontagemaschine bekannt. Eine Reifenmontagemaschine weist normalerweise ein Reifenmontagewerkzeug auf, welches entweder automatisch durch die Reifenmontagemaschine bewegt wird oder durch einen Anwender in die benötigte Position bewegt wird. Es existieren auch Reifenmontagewerkzeuge als eigenständige Bauteile oder Werkzeuge, welche nicht mit einer Reifenmontagemaschine verbunden sind. Das Reifenmontagewerkzeug dient zur Montage oder Demontage eines Reifens auf eine Felge. Hierbei muss der Reifenwulst über das Felgenhorn der Felge bewegt werden. Dieser Vorgang ist nur mit einem sehr hohen Kraftaufwand möglich. Des Weiteren sollte die Reifenmontage und Demontage nur mit höchster Sorgfalt durchgeführt werden, da bereits kleine Risse in der Reifenoberfläche das Fahrverhalten negativ beeinflussen können oder zu einer Gefährdung im Straßenverkehr führen.

### Offenbarung der Erfindung

Das erfindungsgemäße Reifenmontagewerkzeug mit den Merkmalen gemäß des unabhängigen Anspruches hat den Vorteil, dass auf einer Oberfläche des Arbeitsbereiches Montagepaste oder Schmiermittel zwischen Arbeitsbereich und Reifen gespeichert wird bzw. dorthin transportiert wird, so dass die Reibungskräfte zwischen Reifen und Reifenmontagewerkzeug reduziert werden und die Wahrscheinlichkeit, dass das Rad beschädigt wird, reduziert wird.

Bei einer glatten Oberfläche des Arbeitsbereiches wird das Schmiermittel oder die Montagepaste bereits nach wenigen Arbeitsschritten durch den engen Kontakt zwischen Reifen und Montagewerkzeug und die Bewegung des

Montagewerkzeuges entlang des Reifens entfernt oder reduziert. Abhängig von der Form der Vertiefungen kann die Montagepaste oder das Schmiermittel in den Vertiefungen gespeichert werden oder durch die Bewegung des Montagewerkzeuges entlang des Reifens sogar bewusst in einen Bereich gedrückt oder transportiert werden, in den eine erhöhte Schmierung benötigt wird.

Die Vertiefungen sind napfförmigen Vertiefungen, welche das Schmiermittel oder die Montagpaste in einem Hohlraum zwischen Reifen und Arbeitsbereich speichern, oder die Vertiefungen werden durch langgestreckte Einschnitt gebildet, wobei der langgestreckte Einschnitt von einem ersten Ende zu einem zweiten Ende eine Vergrößerung seiner Breite und eine Vergrößerung seiner Tiefe aufweist. Dies ist vorteilhaft da diese Geometrie zusammen mit einer gerichteten Bewegung des Montagewerkzeuges entlang des Reifens das Schmiermittel oder die Montagepaste von einem Ende der langegestreckten Vertiefung zum anderen Ende der langgestreckten Vertiefung transportiert.

In den abhängigen Ansprüchen sind vorteilhafte Ausgestaltungen und Weiterbildungen der erfindungsgemäßen Vorrichtung und des erfindungsgemäßen Verfahrens angegeben.

Es ist von Vorteil, wenn die zweite Seite Vertiefungen in einer zweiten Oberfläche aufweist, so dass auf einer Oberfläche des Arbeitsbereiches, welche der Felge zugewandt ist oder die Felge berührt, Montagepaste oder Schmiermittel gespeichert wird bzw. dorthin transportiert wird, so dass die Reibungskräfte reduziert werden, falls ein Kontakt zwischen Felge und Arbeitsbereich auftritt.

Die Tiefe und die Breite der langgestreckten Einschnitte unterscheidet sich nicht wesentlich von der Tiefe und Breite der napfförmigen Vertiefungen. Die Länge der langgestreckten Einschnitte kann beliebig gewählt werden.

Eine Veränderung der Tiefe und/oder der Breite des langestreckte Einschnittes ist vorteilhaft, da Schmiermittel und/oder Montagepaste bewusst in einen bestimmten Bereich entlang des langgestreckten Abschnittes transportiert wird.

Auch eine V-förmige Anordnung mehrere langgestreckten Einschnitte zueinander ist vorteilhaft, da abhängig von der Bewegungsrichtung des Montagewerkzeuges entlang des Reifens Schmiermittel oder Montagepaste entweder in den Bereich der gemeinsamen Spitze oder zu den voneinander beabstandeten Enden transportiert wird.

### Ausführungsbeispiele

Bevorzugte Ausführungsbeispiele der Erfindung sind in der Zeichnung dargestellt und in der nachfolgenden Beschreibung näher erläutert.

Es zeigen:
Figur 1 eine schematische Darstellung einer Reifenmontagemaschine mit Reifenmontagewerkzeug, bei der Montage eines Reifens auf eine Felge,
Figur 2 ein Reifenmontagewerkzeug gemäß dem Stand der Technik,
Figur 3 ein Reifenmontagewerkzeug gemäß einem ersten Ausführungsbeispiel,
Figur 4 ein Reifenmontagewerkzeug gemäß einem zweiten Ausführungsbeispiel,
Figur 5 eine vergrößerte Ansicht einer Kontaktfläche zwischen einem Reifenmontagewerkzeug und einem Reifen.

### Ausführungsformen der Erfindung

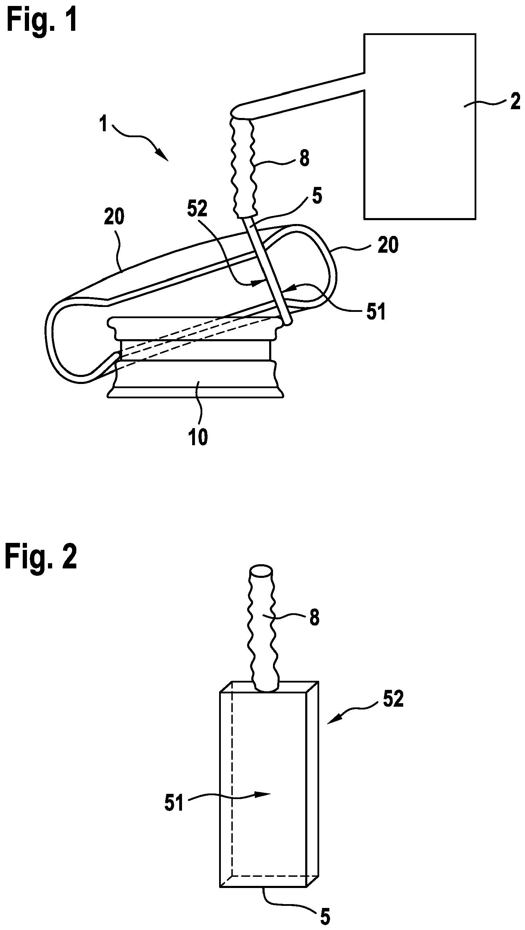

Die schematische Ansicht gemäß Figur 1 zeigt eine Reifenmontagemaschine 2 mit einem Reifenmontagewerkzeug 1, welches zum Montieren und/oder Demontieren eines Reifens 20 auf/von eine Felge 10 dient. Das Reifenmontagewerkzeug 1 weist einen Hand- oder Maschinenbereich 8 und einen Arbeitsbereich 5 auf. Der Hand-oder Maschinenbereich 8 kann mit der Reifenmontagemaschine 2 verbunden sein. Hierbei ist eine Ansteuerung bzw. Bewegung des Reifenmontagewerkzeuges 1 durch die Reifenmontagemaschine 2 möglich. Alternativ kann das Reifenmontagewerkzeug 1 durch einen Anwender an die relevanten Stellen zwischen Reifen 20 und Felge 10 geführt werden.

Das Reifenmontagewerkzeug 1 kann auch als eigenständiges Werkzeug ausgebildet sein. In diesem Fall ist das Reifenmontagewerkzeug 1 nicht mit der Reifenmontagemaschine 2 verbunden ist. und muss durch einen Anwender bewegt werden.

Der Anwender kann das Reifenmontagewerkzeug 1 im Hand- oder Maschinenbereich 8 greifen und an die relevanten Stellen zwischen Reifen 20 und Felge 10 führen.

Der Arbeitsbereich 5 kann eine Vielzahl von unterschiedlichen Geometrien aufweisen, welche zum Montieren und/oder Demontieren eines Reifens 20 auf eine Felge 10 geeignet sind.

Die Geometrie des Arbeitsbereiches 5 kann eine komplexe dreidimensionale Form oder eine simple Formen, beispielsweise ein verdickter abgeflachter quaderförmiger Stab, wie in Figur 2 dargestellt, sein. Der Arbeitsbereich 5 weist eine erste Seite 51 mit einer ersten Oberfläche 41, welche beim Montieren und/oder Demontieren im Kontakt mit dem Reifen 20 ist, auf. Des Weiteren weist der Arbeitsbereich 5 eine zweite Seite 52 mit einer zweiten Oberfläche 42, welche beim Montieren und/oder Demontieren der Felge 10 zugewandt ist, auf. Die erste Seite 51 und die zweite Seite 52 sind meist gegenüber voneinander angeordnet, sie können aber auch in einen Winkel zueinander ausgerichtet sein.

Bei der Montage und Demontage eines Reifens 20 auf oder von einer Felge 10 treten sehr große Kräfte auf, da der Reifenwulst über das Felgenhorn gebracht werden muss. Während des Montier oder Demontierprozesses wird normalerweise eine Montagepaste oder Schmiermittel auf den Reifenwulst und das Reifenmontagewerkzeug 1 gebracht. Durch die Montagepaste oder das Schmiermittel sollen Beschädigungen am Reifen 20 verhindert werden.

Aus dem Stand der Technik sind nur Montagewerkzeuge 1 mit Arbeitsbereichen 5, die eine glatte Oberfläche, gemäß Figur 2, aufweisen, bekannt. Während das Reifenmontagewerkzeug 1 mit dem Reifen 20 in Kontakt tritt, wird die Montagepaste oder das Schmiermittel verdrängt bzw. weggeschoben und muss auf diesem ständig erneuert werden. Auch können die Reibungskräfte zwischen Reifen 20 und Arbeitsbereich 5 des Montagewerkzeuges 1 nicht im gewünschten Maß reduziert werden.

Gemäß der vorgeschlagenen Erfindung weist die erste Seite 51 des Arbeitsbereiches 5 Vertiefungen 7 in einer ersten Oberfläche 41 auf. Die Vertiefungen 7 können die Montagepaste oder das Schmiermittel zwischen dem Reifen 20 und dem Arbeitsbereich 5 speichern oder in einen Bereich leiten, in dem besonders viel Montagepaste oder Schmiermittel benötigt wird.

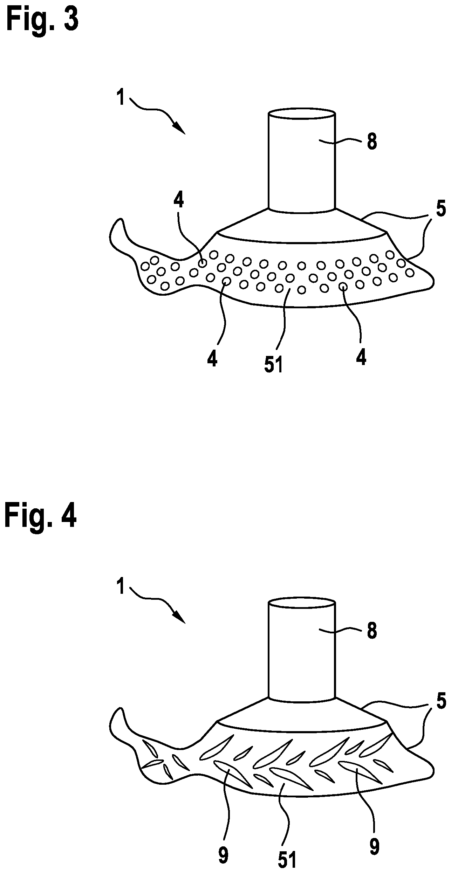

In Figur 3 ist ein Reifenmontagewerkzeug 1 gemäß einem ersten Ausführungsbeispiel gezeigt. Die Vertiefungen 7 werden durch napfförmige Vertiefungen 4, also im Wesentlichen kreisrunde Vertiefungen, gebildet. Die napfförmigen Vertiefungen 4 bilden dabei eine regelmäßige Oberflächenstruktur ähnlich, wie bei einem Golfball. Diese Oberflächenstruktur ist auch unter dem Begriff Dimples bekannt. Die Vielzahl von napfförmigen Vertiefungen 4 sind zueinander beabstandet und weisen eine Tiefe t auf, welche weniger als 4 mm, vorzugsweise 2mm bis 2,5 mm, beträgt. Der Durchmesser d der napfförmigen Vertiefungen 4 ist größer als deren Tiefe t und liegt im Bereich von 3 mm bis 6 mm, vorzugsweise 4 mm bis 5 mm.

In Figur 4 ist ein Reifenmontagewerkzeug 1 gemäß einem zweiten Ausführungsbeispiel gezeigt. Die Vertiefungen 7 werden durch langgestreckte Einschnitte 9 gebildet. Die langestreckten Einschnitte 9 sind dabei V-förmig zueinander angeordnet. Es ist jedoch auch jede andere vorteilhafte Anordnung der langestreckten Einschnitte 9 möglich.

Die langgestreckten Einschnitte 9 können gerade verlaufen, zick-zack-förmig, wellenförmig oder treppenförmig verlaufen.

Um die Montagepaste oder das Schmiermittel in einen Bereich zu leiten, in dem besonders viel Montagepaste oder Schmiermittel benötigt wird, kann sich die Breite b und/oder Tiefe a eines langgestreckten Einschnittes 7 über die Länge verändern.

Gemäß einem weiteren Ausführungsbeispiel kann von einem ersten Ende zu einem zweiten Ende des langgestreckten Einschnittes 7 eine Vergrößerung der Breite und eine Vergrößerung der Tiefe stattfinden. Der langgestreckte Einschnitt kann als halbkreisförmiger Tunnel oder als rechteckiger Tunnel ausgebildet sein. Der Übergang von einer Fläche auf die nächste Fläche kann einen Radius aufweisen.

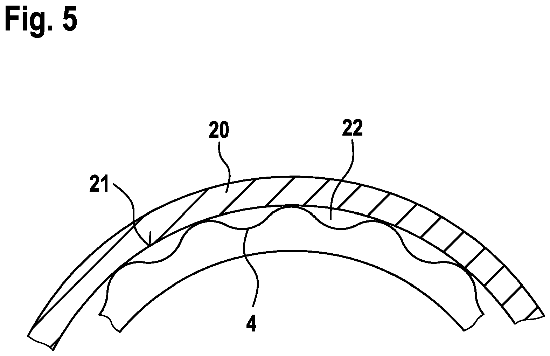

In Figur 5 ist eine vergrößerte Ansicht einer Kontaktfläche 21 zwischen einem Reifenmontagewerkzeug 1 und einem Reifen 20 gezeigt. Das Reifenmontagewerkzeug 1 weist in der Figur 5 einen Arbeitsbereich 5 mit napfförmigen Vertiefungen 4 in der ersten Oberfläche 41 auf. Durch die napfförmigen Vertiefungen 4 reduziert sich die Kontaktfläche 21 zwischen Reifen 10 und Arbeitsbereich 51. Des Weiteren bilden sich Hohlräume 22 zwischen dem Reifen 20 und der ersten Oberfläche 41, in denen sich Montagepaste oder Schmiermittel ansammeln bzw. gespeichert werden kann.

Gemäß einem weiteren Ausführungsbeispiel kann die zweite Seite 52 Vertiefungen 7 in der zweiten Oberfläche 42 aufweisen. Die Vertiefungen 7 können durch napfförmige Vertiefungen 4 oder durch langgestreckte Einschnitte 9 gemäß der beschriebenen Ausführungsbeispiele der ersten Oberfläche 51 gebildet werden.

Durch die Vertiefungen 7 kann Schmiermittel oder Montagepaste in einem Bereich gespeichert werden oder in einen Bereich transportiert werden, in dem die zweite Oberfläche 52 mit der Felge 10 in Kontakt tritt.

## Patentansprüche

1. Reifenmontagewerkzeug (1) zum Montieren und/oder Demontieren eines Reifens (20) auf eine Felge mit einem Hand- oder Maschinenbereich (8) und einem Arbeitsbereich (5), welcher zwischen dem Reifen (20) und der Felge (10) angeordnet wird, wobei der Arbeitsbereich (5) eine erste Seite (51) mit einer ersten Oberfläche (41), welche beim Montieren und/oder Demontieren im Kontakt mit dem Reifen (20) ist, und eine zweite Seite (52) mit einer zweiten Oberfläche (42), welche beim Montieren und/oder Demontieren der Felge (10) zugewandt ist, aufweist, wobei die erste Seite (51) Vertiefungen (4) in der ersten Oberfläche (41) aufweist; **dadurch gekennzeichnet,**
**dass** die Vertiefungen (4) napfförmige Vertiefungen (4) sind; oder
**dass** die Vertiefungen (4) durch langgestreckte Einschnitte (9) gebildet werden und von einem ersten Ende zu einem zweiten Ende eine Vergrößerung ihrer Breite und eine Vergrößerung ihrer Tiefe aufweisen.

2. Reifenmontagewerkzeug (1) nach Anspruch 1,
**dadurch gekennzeichnet, dass** die zweite Seite (52) Vertiefungen (4) in der zweiten Oberfläche (42) aufweist.

3. Reifenmontagewerkzeug (1) nach Anspruch 1 oder 2,
**dadurch gekennzeichnet, dass** die langgestreckten Einschnitte (9) gerade verlaufend, zick-zack-förmig, wellenförmig oder treppenförmig ausgebildet sind.

4. Reifenmontagewerkzeug (1) nach einem der Ansprüche 1 bis 3,
**dadurch gekennzeichnet, dass** mehrere langestreckten Einschnitte (9) V-förmig zueinander angeordnet sind.

## Claims

1. A tire mounting tool (1) for mounting and/or unmounting a tire (20) on a rim, comprising a hand or machine area (8) and a working area (5) which is arranged between the tire (20) and the rim (10), wherein the working area (5) has a first side (51) with a first surface (41) which is in contact with the tire (20) during mounting and/or unmounting, and a second side (52) with a second surface (42) which faces the rim (10) during mounting and/or unmounting, wherein the first side (51) has depressions (4) in the first surface (41), **characterized in that** the depressions (4) are cup-shaped depressions (4); or that the depressions (4) are formed by elongated incisions (9) and have an increase in width and an increase in depth from a first end to a second end thereof.

2. A tire mounting tool (1) according to claim 1,
**characterized in that** the second side (52) has depressions (7) in the second surface (42).

3. A tire mounting tool (1) according to claim 1 or 2,
**characterized in that** the elongated incisions (9) are formed to have a straight, zigzag, wave-like or step-like shape.

4. A tire mounting tool (1) according to any of claims 1 to 3,
**characterized in that** several elongated incisions (9) are arranged in V-shaped manner relative to one another.

## Revendications

1. Outil pour monter des pneus (1) permettant de monter et/ou de démonter un pneu (20) sur une jante, avec une zone manuelle ou mécanique (8) et une zone de travail (5) qui se positionne entre le pneu (20) et la jante (10), la zone de travail (5) présentant une première face (51) dotée d'une première surface (41) qui est en contact avec le pneu (20) lors du montage et/ou du démontage, et une deuxième face (52) dotée d'une deuxième surface (42) qui est tournée vers la jante (10) lors du montage et/ou du démontage,
la première face (51) présentant des renfoncements (4) dans la première surface (41) ; **caractérisé en ce que**
les renforcements (4) sont en forme de cuvette (4) ; ou
**en ce que** les renfoncements (4) sont formés par des incisions allongées (9) et présentent d'une première extrémité à une deuxième extrémité un agrandissement dans leur largeur et un agrandissement dans leur profondeur.

2. Outil pour monter des pneus (1) selon la revendication 1,
**caractérisé en ce que** la deuxième face (52) présente des renfoncements (4) dans la deuxième surface (42).

3. Outil pour monter des pneus (1) selon la revendication 1 ou 2,
**caractérisé en ce que** les incisions allongées (9) peuvent avoir une forme droite, en zig-zag, ondulée ou en escalier.

4. Outil pour monter des pneus (1) selon l'une quelconque des revendications 1 à 3,
**caractérisé en ce que** plusieurs incisions allongées (9) sont agencées les unes par rapport aux autres en forme de V.
